# EUROPEAN PATENT SPECIFICATION

(11) **EP 1 665 867 B1**
(45) Date of publication and mention of the grant of the patent: **07.12.2011**
(21) Application number: 04766755.5
(22) Date of filing: 09.09.2004
(51) Int. Cl.: H04Q 11/00, H04J 14/02

(54) **NODE FOR AN OPTICAL COMMUNICATION NETWORK**
KNOTEN FÜR EIN OPTISCHES KOMMUNIKATIONSNETZ
NOEUD POUR RESEAU DE COMMUNICATION OPTIQUE

(30) Priority: 20.09.2003 DE 10343615
(43) Date of publication of application: 07.06.2006
(73) Proprietor: Ericsson AB, 164 80 Stockholm (SE)
(72) Inventor: PILCHER, Olaf, 71522 Backnang (DE); ELBERS, Jörg-Peter, 71522 Backnang (DE); WELLBROCK, Glen, Wylie, Texas, 75098 (US)
(74) Representative: Stasiewski, Piotr Grzegorz
(86) International application number: PCT/EP2004/052114
(87) International publication number: WO 2005/029905

(56) References cited:
- US-A1- 2002 064 336

## Description

The present invention relates to a node for an optical communication network in which several nodes are connected by transmission lines on which optical signals are transmitted in wavelength division multiplex. Such a wavelength division multiplex is formed of a plurality of information signals which are modulated on carrier signals of different wavelengths, and which may originate from different sources and may be bound for different sinks and must therefore be switched independently from one another in a node.

A node for such an optical communication network therefore generally comprises a switching unit, which may be formed of one or more optical switching fabrics and has a plurality of ports for input and output channels, on each of which one of the optical information signals is transmitted. Between the optical switching unit and each transmission line, there is an optical interface which comprises a demultiplexer for decomposing a multiplex signal arriving from the transmission line into a plurality of input channels, each of which is supplied to an input port of the switching unit, and a multiplexer for assembling a plurality of output channels, each of which originates from an output port of the switching unit, into an outgoing multiplex signal. In order to add to the network information signals for transmission and to drop them therefrom, a transponder is provided which brings an information signal supplied by a source into an appropriate form for transmission on the optical network, or, inversely, brings an information signal transmitted on the network into an appropriate form for processing by a sink connected to it.

An example of such a node can be found in : US 2002/064336 Al (GRAVES ALAN F ET AL) 30 May 2002 (2002-05-30).

In order to achieve as high a degree of reliability as possible in such a network, all components of the network should be redundant. I.e., for an information signal which is transmitted between start and target nodes of the network on a so called working path, at least one protection path must exist, on which path a copy of the information signal is transmitted, so that in case of a failure of the main path the copy transmitted on the protection path is available at the target node and can be used, or which path is kept available for transmitting such a copy in case of need, so that if a failure of the working path is detected, the transmission may be continued on the protection path with minimum loss of time.

Working path and protection path must go along different transmission lines and, if available, different intermediate nodes at these transmission lines, so that an intem-uption of a single transmission line or a failure of a single intermediate node cannot cause working and protection paths to fail at the same time.

Start and target nodes are necessarily the same for both paths, so that in such a node special measures have to be taken in order to avoid that a partial failure of such a node affects both paths simultaneously.

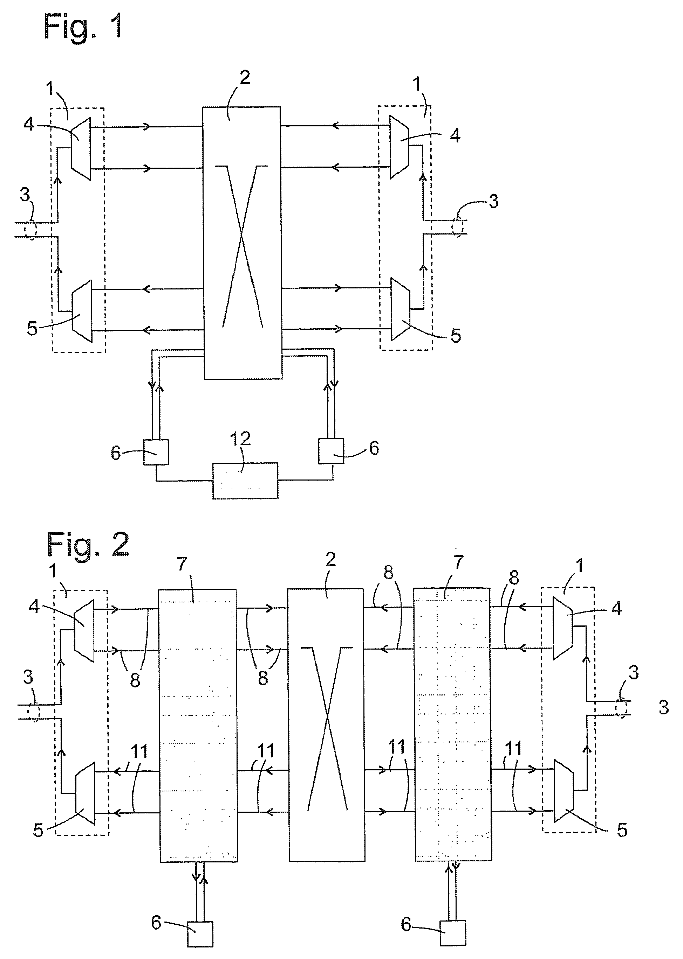

Known solutions of this problem will be outlined briefly based on Fig. 1, which shows schematically a prior art structure of a node.

The node comprises a plurality of interfaces 1, two of which are shown in the Figure, and which connect a central switching unit 2 of the node to bi-directional optical transmission lines 3 attached to the interfaces 1. Each interface 1 comprises a demultiplexer 4 having an input connected to the transmission line and a number of outputs according to the number of wavelengths of a multiplex transmitted on the transmission line 3. The demultiplexer 4 disassembles the multiplex signal into its various modulated carrier waves, each of which correspond to one information signal, and outputs these at one of its output ports. Each of these output ports is connected to an input port of the switching unit 2, which switches the concerned information signal to at least one of its output ports. These output ports are each connected to an input port of a multiplexer 5 which assembles the information signals present at its input ports into an outgoing multiplex signal, or to a transponder 6. The transponders 6 each comprise an optical-electrical or an electrical-optical converter which allow a source or sink connected to it, both of which are referred to as a terminal in the following, to input data into the network or to receive them therefrom. In order to protect the terminal against failures of the transponders 6, there must be assigned to it a working transponder for conveying the working signal and a protection transponder, which conveys the protection signal or is adapted to do so in case of need. A protection against failures of the switching unit 2 is not possible straightforwardly; if it fails, no optical information signal can be transmitted anymore between the transmission lines 3 and the transponders 6.

In order to protect against failures of the switching unit 2, it might be duplicated. However, this solution is extremely expensive.

A possibility to provide redundancy at less expense is to form the switching unit 2 not as a single switching fabric, the input ports of which are connected to all demultiplexers 4 and transponders 6 and the output ports of which are connected to all multiplexers 5 and transponders 6, but to form the switching unit from a plurality of switching fabrics, each of which receives from each demultiplexer only a specific carrier wavelength assigned to it and switches it to the multiplexers. If working and protection transponders of a same terminal are connected to different ones of these wavelength selective switching fabrics, a failure of a single one of these switching fabrics can no longer affect working and protection signals simultaneously. However, this solution works only if it is ensured that working and protection signals reach the node not only by different transmission lines, but also with different carrier wavelengths.

If the individual switching fabrics switch not only one but several carrier wavelengths, the restrictions are still more serious, since the protection signal, in order to make sure that it is conveyed by another switching fabric than the working signal, must not have any of the several carrier wavelengths winch are switched by the switching fabric that conveys the working signal.

The object of the invention is to provide a node for an optical communication network which is simple and economic to manufacture and which has no components which are passed through both by a working signal and by its associated protection signal, so that a failure of this component might interrupt both signals.

Concerning the aspect of an information signal arriving at the node from a second node for retransmission to a sink connected to the node, the object is achieved by a node having the features of claim 1; concerning the aspect of an information signal arriving from a source connected to the node for retransmission to a second node, it is achieved by a node having the features of claim 4. An input branching means which is arranged between the interfaces and the switching unit allows to supply information signals arriving at the interfaces, in particular a working signal and a protection signal associated to it, which necessarily arrive at different interfaces, to an optical receiver while avoiding the switching unit. Therefore, a failure of the switching unit can only interrupt those information signals, which go through the node from one interface to another. Since, as indicated above, working and protection signals should not go through the same nodes, such a failure can never affect associated protection and working signals. Information signals which are to be dropped at the location of the node do not go through the switching unit and are therefore not affected by an eventual failure thereof.

The same applies mutatis mutandis to supplying an information signal from a source into the network at a node. In order to supply working and protection signals of such a terminal, an output branching means is provided between each interface and the switching unit and is adapted to supply an output channel to the interface either from the switching unit or from the optical transmitter of a transponder. At the node where the information signals are fed into the network, working and protection signals do not go through a same switching unit either.

In the simplest case, the branching means might be formed by a signal divider which transmits an information signal coming from a demultiplexer proportionally and simultaneously to an input of the switching unit and to a transponder, respectively, or which superimposes output signals of the switching unit and of a transponder. In order to avoid the power losses resulting therefrom, the branching means are preferably formed as switches which, at a given instant, forward an information signal either only to the switching unit or only to a transponder, or which receive an information signal either only from the switching unit or only from the signal converter unit.

Transponders which have one output port of the demultiplexer or one input port of the multiplexer, respectively, assigned to them by which they are adapted to be connected to the input or output branching means, respectively, should be provided in a number corresponding to that of the input and output channels, respectively, in order to ensure that an information signal can be dropped or added at any arbitrary wavelength of the multiplex.

Transponders which are adapted to supply an information signal with a selectable carrier wavelength to an output channel may be connected to a plurality of output channels by the output branching means.

In order to allow for bi-directional data traffic, each transponder preferably comprises a transmitter for an output channel and a receiver for an input channel. Transmitters and receivers should then be connected to the branching means of a same interface.

An additional advantage is achieved if the branching means not only supply incoming information signals selectively to the branching unit or to one the transponders or receive outgoing information signals selectively either from the switching unit or one of the transponders, respectively, but are further capable of supplying information signals from a transponder to the switching unit and vice versa. Thus, e.g., it becomes possible first to extract an information signal, to regenerate it in the transponder and to supply it again to the network from the same transponder, and, in case the transponders are tunable, to change the carrier wavelength on which an information signal is transmitted.

Further features and embodiments of the invention become apparent from the subsequent description of embodiments, referring to the appended drawings.
Fig. 1, already discussed, shows a conventional node;
Fig. 2 shows a basic configuration of a node according to the invention;
Fig. 3 is a first simple embodiment of a branching means that may be used in the node; and
Figs. 4 and 5 show advanced embodiments of branching means.

The node of the invention shown in Fig. 2 as a block diagram is distinguished from the conventional one of Fig. 1 by the fact that each interface 1 of the node has a branching means 7 associated to it which is located at input and output channels 8, 11 between the concerned interface 1 and the input and output ports associated to it of switching unit 2, and which has a number of transponders 6 connected to it.

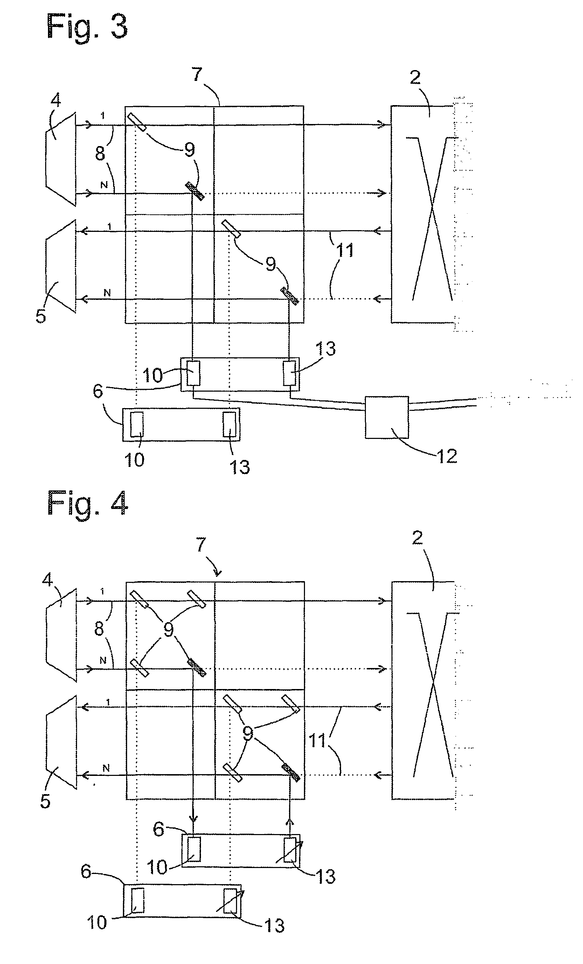

A first example of the branching means 7 is schematically represented in Fig. 3. N information channels 8, each for one information signal, having carrier wavelengths 11, ..., 1N go from an out-put port of demultiplexer 4 of interface 1 to switching unit 2. At each of these input channels 8, a switch, e.g. a moveable mirror 9, is arranged, which, according to its position, either lets the information signal pass to switching unit 2 or deflects it towards receiver 10 of one of the transponders 6. A corresponding group of minors 9 is arranged at output channels 11 for carrier wavelengths 11, ..., 1N which go from output ports of the switching unit 2 to input ports of the multiplexer 5 of interface 1. In the represented configuration, the input channel 8 which guides the information signal of carrier wavelength 11 is transmitted to a switching unit 2, while the information signal of wavelength 1N reaches one of the transponders 6, where it is converted into an electrical signal and is supplied to a terminal 12. The thus extracted information signal is the working signal of terminal 12. The terminal 12 is connected to a further transponder, not shown, which is connected to a branching means 7, which is different from the one represented in Fig. 3 and which receives the protection signal by another interface 1.

The terminal 12 is further connected to a transmitter 13 of the transponder 6 in order to supply a working information signal to the network. The transmitter 13 operates at the fixed wavelength 1N. The optical signal from this transmitter 13 reaches a mirror 9, which deflects it to an input port of the multiplexer 5 for the wavelength 1N. The further transponder, not shown, has a transmitter for transmitting the corresponding protection signal via the other interface. The terminal 12 can thus transmit a working information signal and a protection information signal without assistance from the switching unit 2.

In this embodiment, for each of the N possible carrier wavelengths, the transponders 6 must be connected to the branching means 7 in order to ensure that any information signal arriving at the branching means 7 can be extracted without regard of its carrier wavelength or that an information signal having the same carrier wavelength can be supplied in the opposite direction.

The embodiment of Fig. 4 only requires a smaller number of transponders 6. Each of these transponders 6 has a transmitter 13 which is tuneable to a plurality of carrier wavelengths li, ...,1N, preferably to all wavelengths of the multiplex, and in each output channel 11 that corresponds to one of these carrier wavelengths, there is a mirror 9 or a switch having a similar functionality, which allows to supply an information signal transmitted by transmitter 13 to one of these output channels 11. Inversely, in each input channel 8 having a corresponding carrier wavelength, there is a mirror 9 for extracting an information signal towards receiver 10 of this transponder 6. Since the receivers of conventional transponders are usually sensitive to all wavelengths of the multiplex, such a transponder may be connected to any pair of input and output channels 8, 11, according to need.

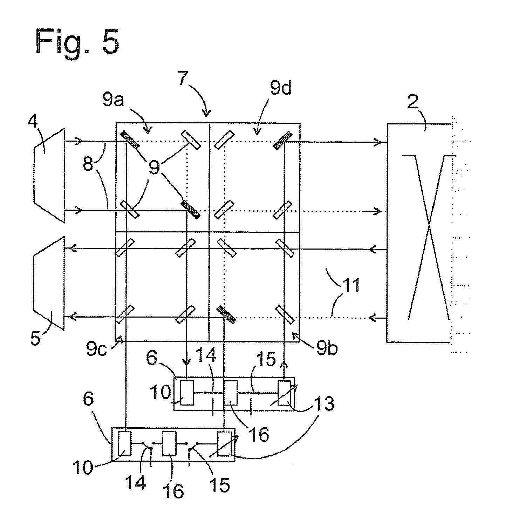

Fig. 5 is a further advanced embodiment of the branching means 7. This branching means comprises four groups of N by M mirrors, M being the number of transponders 6. A first group of mirrors 9a is for deflecting an incoming information signal from an input channel 8 to a transponder, 6, like in Fig. 4; a second group 9b is for supplying an information signal from a transponder 6 to an output channel 11. A third group 9c is for deflecting an information signal from the output channel 11 to one of the transponders 6, and a fourth group 9d for supplying an information signal from a transponder 6 to an input channel 8.

The transponders 6 each have two switches 14, 15 and an impulse shaping circuit 16. In a first position, the switches 14 connect the electrical signal ports of the receiver 10 and the transmitter 13 of a transponder to ports for a terminal. In a second position they connect them to inputs and outputs of the impulse shaping circuit 16, so that an extracted information signal received by receiver 10 is regenerated electrically in the impulse shaping circuit 16 and is then retransmitted as an optical signal by transmitter 13. Such a transponder 6 can be used for selectively extracting an attenuated information signal at an input channel 8, to re-amplify it and to supply it again to the same input channel 8 using one of mirrors 9d, in order then to switch it in the switching unit 2.

Further, it is possible to drop an information signal that arrives e.g. at an input channel 8 having carrier wavelength li, to convert it to another carrier wavelength lj using a transponder 6 and to supply it to the input channel 8 corresponding to this wavelength. This may be necessary if on the transmission line 3 by which the information signal is to be retransmitted from the concerned node, the carrier wavelength li is already occupied by another signal. As a new carrier wavelength lj, preferably a carrier wavelength which is still available on the outgoing transmission line 3 is selected, provided that it is also available in the branching means 7. If this is not so, the information signal may be wavelength-converted twice, in both branching means 7 it passes on its way through the node.

## Claims

1. A node for an optical communication network having at least one switching unit (2), a plurality of optical interfaces (1) for connecting to a transmission line (3), which comprise a demultiplexer (4) for disassembling a multiplex signal arriving from a WDM transmission line into a plurality of input channels (8), each of which is supplied to an input port of the switching unit (2), and a multiplexer (5) for assembling a plurality of output channels (11), each originating from an output port of the switching unit (2), into an outgoing multiplex signal, and at least one receiver (10) for extracting an information signal from the communication network, **characterized in that** an input branching means (7) is located between each interface (1) and the switching unit (2) on the path of the input channels (8) and is adapted to supply an input channel (8) directly to the switching unit (2) as well as to the receiver (10).

2. The node of claim 1, **characterized in that** the input branching means (7) comprises, corresponding to each output port of the demultiplexer (4), a switch (9) for selectively connecting this output port to one of the input ports of the switching unit (2) or to the receiver (10).

3. The node of claim 2, **characterized in that** each receiver (10) has one output port of the demultiplexer (4) associated to it, to which it is connectable by the input branching means (7), and that the receivers (10) are provided in a number corresponding to the number of the input channels.

4. A node for an optical communication network having at least one switching unit (2), a plurality of optical interfaces (1) for connecting to a transmission line (3), which comprise a demultiplexer (4) for disassembling a multiplex signal arriving from a WDM transmission line into a plurality of input channels (8), each of which is supplied to an input port of the switching unit (2), and a multiplexer (5) for assembling a plurality of output channels (11), each originating from an output port of the switching unit (2), into an outgoing multiplex signal, and at least one transmitter (13) for supplying an information signal to the communication network, **characterized in that** an output branching means (7) is located between each interface (1) and the switching unit (2) on the path of the output channels (11) and is adapted to supply an output channel (11) to the interface (1) received directly from the switching unit (2) as well as from the transmitter (13).

5. The node of claim 4, **characterized in that** the output branching means (7) comprises, corresponding to each input port of the multiplexer (5), a switch (9) for selectively connecting this input port to one of the output ports of the switching unit (2) or to the transmitter (13).

6. The node of claim 5, **characterized in that** the transmitters (13) are provided in a number corresponding to the number of the output channels (11), and that each transmitter (13) has one input port of the multiplexer (5) associated to it, to which it is connectable by the output branching means (7).

## Patentansprüche

1. Knoten für ein optisches Kommunikationsnetz mit mindestens einer Schalteinheit (2), einer Mehrzahl von optischen Schnittstellen (1) zum Anschließen an eine Übertragungsleitung (3), welche einen Demultiplexer (4) zum Zerlegen eines Multiplexsignals, das von einer WDM-Übertragungsleitung ankommt, in eine Mehrzahl von Eingangskanälen (8), welche jeweils einem Eingangsanschluss der Schalteinheit (2) zugeführt werden, und einen Multiplexer (5) zum Zusammensetzen einer Mehrzahl von Ausgangskanälen (11), die jeweils von einem Ausgangsanschluss der Schalteinheit (2) stammen, zu einem abgehenden Multiplexsignal umfassen, und mindestens einem Empfänger (10) zum Extrahieren eines Informationssignals aus dem Kommunikationsnetz, **dadurch gekennzeichnet, dass** ein Eingangsverzweigungsmittel (7) zwischen jeder Schnittstelle (1) und der Schalteinheit (2) auf dem Weg der Eingangskanäle (8) anordnet und so ausgelegt ist, dass es der Schalteinheit (2) sowie dem Empfänger einen Eingangskanal (8) direkt zuführt.

2. Knoten nach Anspruch 1, **dadurch gekennzeichnet, dass** das Eingangsverzweigungsmittel (7) entsprechend jedem Ausgangsanschluss des Demultiplexers (4) einen Schalter (9) zum selektiven Verbinden dieses Ausgangsanschlusses mit einem der Eingangsanschlüsse der Schalteinheit (2) oder mit dem Empfänger (10) umfasst.

3. Knoten nach Anspruch 2, **dadurch gekennzeichnet, dass** jeder Empfänger (10) einen Ausgangsanschluss des Demultiplexers (4), mit welchem es durch das Eingangsverzweigungsmittel (7) verbunden werden kann, damit verbunden aufweiset, und dass die Empfänger (10) in einer Anzahl vorgesehen sind, die der Anzahl der Eingangskanäle entspricht.

4. Knoten für ein optisches Kommunikationsnetz mit mindestens einer Schalteinheit (2), einer Mehrzahl von optischen Schnittstellen (1) zum Anschließen an eine Übertragungsleitung (3), welche einen Demultiplexer (4) zum Zerlegen eines Multiplexsignals, das von einer WDM-Übertragungsleitung ankommt, in eine Mehrzahl von Eingangskanälen (8), welche jeweils einem Eingangsanschluss der Schalteinheit (2) zugeführt werden, und einen Multiplexer (5) zum Zusammensetzen einer Mehrzahl von Ausgangskanälen (11), die jeweils von einem Ausgangsanschluss der Schalteinheit (2) stammen, zu einem abgehenden Multiplexsignal umfassen, und mindestens einem Sender (13) zum Zuführen eines Informationssignals zum Kommunikationsnetz, **dadurch gekennzeichnet, dass** ein Ausgangsverzweigungsmittel (7) zwischen jeder Schnittstelle (1) und der Schalteinheit (2) auf dem Weg der Ausgangskanäle (11) anordnet und so ausgelegt ist, dass es der Schnittstelle (1) einen Ausgangskanal (1) zuführt, der direkt von der Schalteinheit (2) sowie vom Sender (13) empfangen wird.

5. Knoten nach Anspruch 4, **dadurch gekennzeichnet, dass** das Ausgangsverzweigungsmittel (7) entsprechend jedem Eingangsanschluss des Multiplexers (5) einen Schalter (9) zum selektiven Verbinden dieses Eingangsanschlusses mit einem der Ausgangsanschlüsse der Schalteinheit (2) oder mit dem Sender (13) umfasst.

6. Knoten nach Anspruch 5, **dadurch gekennzeichnet, dass** die Sender (13) in einer Anzahl vorgesehen sind, die der Anzahl von Ausgangskanälen entspricht, und dass jeder Sender (13) einen Eingangsanschluss des Multiplexers (5), mit welchem er durch das Ausgangsverzweigungsmittel (7) verbunden werden kann, damit verbunden aufweist.

## Revendications

1. Noeud pour un réseau de communication optique ayant au moins une unité de commutation (2), une pluralité d'interfaces optiques (1) pour la connexion à une ligne de transmission (3), comprenant un démultiplexeur (4) pour désassembler un signal de multiplexage arrivant d'une ligne de transmission WDM dans une pluralité de canaux d'entrée (8), chacun d'eux étant fourni à un port d'entrée de l'unité de commutation (2), et un multiplexeur (5) pour assembler une pluralité de canaux de sortie (11), chacun provenant d'un port de sortie de l'unité de commutation (2), dans un signal de multiplexage sortant, et au moins un récepteur (10) pour extraire un signal d'information du réseau de communication, **caractérisé en ce qu'**un moyen d'embranchement d'entrée (7) est situé entre chaque interface (1) et l'unité de commutation (2) sur la voie des canaux d'entrée (8) et est apte à fournir un canal d'entrée (8) directement à l'unité de commutation (2) ainsi qu'au récepteur (10).

2. Noeud selon la revendication 1, caractérisé en ce le moyen d'embranchement d'entrée (7) comprend, en correspondance avec chaque port de sortie du démultiplexeur (4), un commutateur (9) pour connecter sélectivement ce port de sortie à l'un des ports d'entrée de l'unité de commutation (2) ou au récepteur (10).

3. Noeud selon la revendication 2, **caractérisé en ce que** chaque récepteur (10) a un port de sortie du démultiplexeur (4) qui lui est associé, auquel il peut être connecté par le moyen d'embranchement d'entrée (7), et **en ce que** les récepteurs (10) sont fournis dans un nombre correspondant au nombre des canaux d'entrée.

4. Noeud pour un réseau de communication optique ayant au moins une unité de commutation (2), une pluralité d'interfaces optiques (1) pour la connexion à une ligne de transmission (3), comprenant un démultiplexeur (4) pour désassembler un signal de multiplexage arrivant d'une ligne de transmission WDM dans une pluralité de canaux d'entrée (8), chacun d'eux étant fourni à un port d'entrée de l'unité de commutation (2), et un multiplexeur (5) pour assembler une pluralité de canaux de sortie (11), chacun provenant d'un port de sortie de l'unité de commutation (2), dans un signal de multiplexage sortant, et au moins un émetteur (13) pour fournir un signal d'information au réseau de communication, **caractérisé en ce qu'**un moyen d'embranchement de sortie (7) est situé entre chaque interface (1) et l'unité de commutation (2) sur la voie des canaux de sortie (11) et est apte à fournir à l'interface (1) un canal de sortie (11) reçu directement de l'unité de commutation (2) ainsi que de l'émetteur (13).

5. Noeud selon la revendication 4, caractérisé en ce le moyen d'embranchement de sortie (7) comprend, en correspondance avec chaque port d'entrée du multiplexeur (5), un commutateur (9) pour connecter sélectivement ce port d'entrée à l'un des ports de sortie de l'unité de commutation (2) ou à l'émetteur (13).

6. Noeud selon la revendication 5, **caractérisé en ce que** les émetteurs (13) sont fournis dans un nombre correspondant au nombre des canaux de sortie (11), et **en ce que** chaque émetteur (13) a un port d'entrée du multiplexeur (5) qui lui est associé, auquel il peut être connecté par le moyen d'embranchement de sortie (7).
